# EUROPEAN PATENT SPECIFICATION

(11) **EP 4 344 138 B1**
(45) Date of publication and mention of the grant of the patent: **21.05.2025**
(21) Application number: 21945069.9
(22) Date of filing: 08.06.2021
(51) Int. Cl.: H04L 5/00, H04W 8/04, H04W 24/04, H04W 48/16, H04L 41/0893

(54) **COMMUNICATION CONTROL SYSTEM, CONTROL DEVICE, COMMUNICATION CONTROL METHOD, AND COMMUNICATION CONTROL PROGRAM**
KOMMUNIKATIONSSTEUERUNGSSYSTEM, STEUERUNGSVORRICHTUNG, KOMMUNIKATIONSSTEUERUNGSVERFAHREN UND KOMMUNIKATIONSSTEUERUNGSPROGRAMM
SYSTÈME DE COMMANDE DE COMMUNICATION, DISPOSITIF DE COMMANDE, PROCÉDÉ DE COMMANDE DE COMMUNICATION ET PROGRAMME DE COMMANDE DE COMMUNICATION

(43) Date of publication of application: 27.03.2024
(73) Proprietor: MITSUBISHI ELECTRIC CORPORATION, Chiyoda-ku Tokyo 100-8310 (JP)
(72) Inventor: YASUTOMO, Yohei, Tokyo 1008310 (JP); ISHIHARA, Koshiro, Tokyo 1008310 (JP); YAMAUCHI, Takahisa, Tokyo 1008310 (JP)
(74) Representative: Pfenning, Meinig & Partner mbB
(86) International application number: PCT/JP2021/021812
(87) International publication number: WO 2022/259392

(56) References cited:
- WO-A1-2015/136961
- WO-A1-2015/136961
- CN-A- 111 935 267
- US-A1- 2020 245 381
- TAKUYA MIYASAKA, TAKESHI KITAHARA: "BI-6-5 A Study of Network Slicing to Support Factory Networks in the Society 5.0 ", IEICE 2019 COMMUNICATION SOCIETY CONFERENCE PROCEEDINGS VOL. 2; SEPTEMBER 10-13, 2019, vol. 2, 27 August 2019 (2019-08-27) - 13 September 2019 (2019-09-13), JP, pages SS-110 - SS-111, XP009542406

## Description

### Technical Field

The present disclosure relates to a communication control system, a control device, a communication control method, and a communication control program.

### Background Art

An industrial network is used for a network of an industrial system such as lines or robots built in a factory. An industrial network is required to have high fault tolerance in order to ensure high productivity and safety of the industrial system. In addition, unlike an office or a data center, a factory is often in an environment where there are dust and vibration, for example. Therefore, the elements constituting an industrial network are required to have particularly high fault tolerance. Various methods are being studied to realize high fault tolerance.

For example, in Patent Literature 1, when in an industrial network a failure occurs in a link between devices constituting the network, a device located close to a location where the failure has occurred transmits a message indicating the location of the failure according to a predetermined protocol. Then, a device that has received this message updates a routing table so as to avoid the location of the failure indicated in the message. With this arrangement, a single point of failure in a transmission path is avoided and the fault tolerance of the industrial system is improved.

In recent years, the standardization of the fifth-generation mobile communication system (5G) has progressed, and its practical application is progressing. 5G provides a 5G network, which is a wireless network, to the public. A utilization method called local 5G is also being considered, in which a 5G network is built as a private network in a local area. By applying this local 5G to a network of an industrial system, effects such as reducing wiring and simplifying maintenance are expected.

A 5G network is composed of end terminals that participate in the 5G network, a RAN that serves as a base station, and a 5G core. Transmission data from an end terminal goes through the RAN, and is transferred to another end terminal or another network such as the Internet in a UPF on the 5G core. RAN is an abbreviation for radio access network. UPF is an abbreviation for user plane function.
WO 2015/136961 A1 discloses a control device, in which at least some of a plurality of controlled devices are classified such that each belongs to one of a plurality of groups. For each group, this control device stores identifying information for identifying the controlled devices that belong to that group and information regarding the behavior of the remaining controlled devices belonging to the group when an anomaly is detected in a controlled device belonging to the group. The control device detects anomalies in the controlled devices on the basis of data exchanged between said controlled devices when a user program is executed. If an anomaly is detected in one of the controlled devices, the control device refers to the abovementioned identifying information to identify the anomaly group, i.e. the group to which the controlled device in which the anomaly was detected belongs, and refers to the behavior information to control the operation of the anomaly group.

### Citation List

### Patent Literature

Patent Literature 1: JP H9-098180 A

### Summary of Invention

### Technical Problem

An industrial system operates such that a plurality of PLCs cooperate via a network and arbitration is performed among a plurality of lines. PLC is an abbreviation for programmable logic controller. When 5G is applied to the industrial system, a network between PLCs is built on the 5G network. In this case, a UPF is responsible for transferring all pieces of data exchanged between PLCs. If the UPF stops operating due to a failure, the PLCs will not be able to cooperate with each other, so that all the lines to be arbitrated will stop. That is, the UPF will become a single point of failure for all the lines to be arbitrated by the PLCs. Therefore, when the 5G network is applied to the industrial system, a problem is that fault tolerance is weak.

An object of the present disclosure is to prevent occurrence of a single point of failure on a 5G core in an industrial system to which a 5G network is applied.

### Solution to Problem

The invention is defined in the appended set of claims. A communication control system according to the present disclosure includes plurality of control devices that communicate via a fifth-generation mobile communication system (5G) network and a plurality of controlled devices respectively controlled by the plurality of control devices,
wherein each control device of the plurality of control devices includes
an information creation unit to calculate a total number of emergency stop groups based on emergency stop group information in which each emergency stop group number assigned to each emergency stop group that is determined based on a range to be affected by an anomaly in each controlled device of the plurality of controlled devices is associated with each corresponding control device of the plurality of control devices, and create slice information for connecting to the same number of user plane functions (UPFs) as the total number of emergency stop groups;
a 5G connection unit to register the control device of the 5G connection unit itself with the 5G network, and acquire UPF destination information, which is destination information of the UPFs; and
a destination information acquisition unit to, based on the UPF destination information, associate each emergency stop group number with a destination UPF without duplication of a destination UPF between the emergency stop groups, and store information in which each emergency stop group number is associated with a destination UPF in a destination conversion table.

### Advantageous Effects of Invention

In a communication control system according to the present disclosure, each emergency stop group number is associated with a destination UPF without duplication of a destination UPF between emergency stop groups. Then, information in which each emergency stop group number is associated with a destination UPF is stored in a destination conversion table. A control device can transmit data using this destination conversion table. Therefore, even if a failure occurs in a UPF, the impact of the failure can be limited to the range of an emergency stop group corresponding to the UPF where the failure has occurred. With this arrangement, an effect of improving fault tolerance in an industrial system can be obtained.

### Brief Description of Drawings

Fig. 1 is a figure illustrating an example of a configuration of a communication control system according to Embodiment 1;
Fig. 2 is a figure illustrating an example of a configuration of a control device according to Embodiment 1;
Fig. 3 is a figure illustrating an example of a detailed functional configuration of the control device according to Embodiment 1;
Fig. 4 is a figure illustrating an example of arrangement of a destination conversion table according to Embodiment 1;
Fig. 5 is a figure illustrating an operational flow of a procedure A in the control device according to Embodiment 1;
Fig. 6 is a figure illustrating an operational flow of a procedure B in the control device according to Embodiment 1;
Fig. 7 is a figure illustrating an operational flow of a procedure C in the control device according to Embodiment 1; and
Fig. 8 is a figure illustrating an example of the configuration of the control device according to a variation of Embodiment 1.

### Description of Embodiments

This embodiment will be described hereinafter using the drawings. In the drawings, the same or equivalent parts are denoted by the same reference sign. In the description of the embodiment, description of the same or equivalent parts will be suitably omitted or simplified.

### Embodiment 1.

### *** Description of Configuration ***

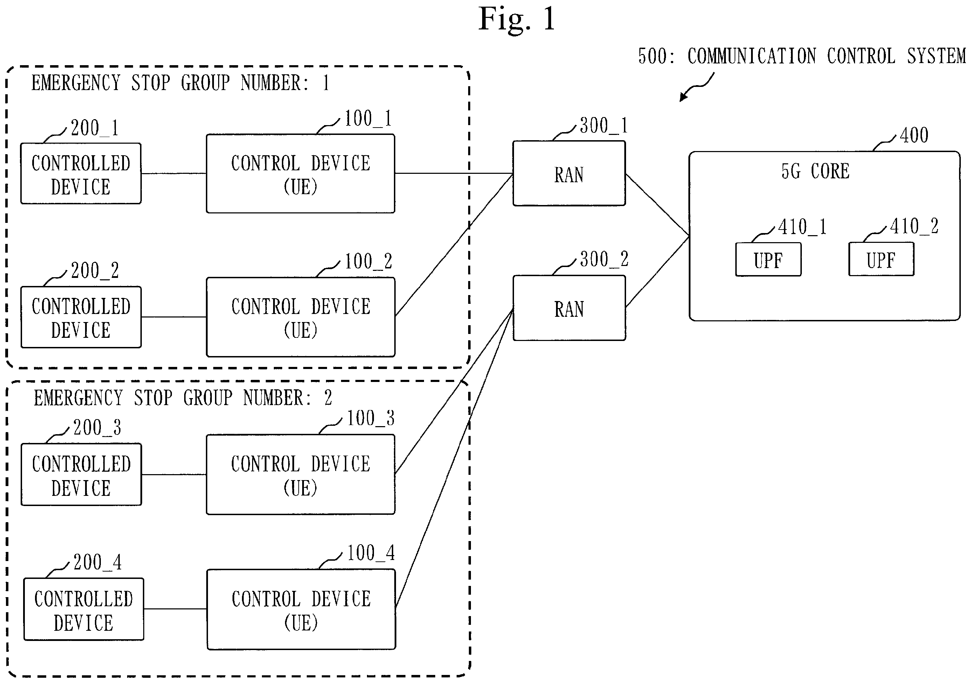

Fig. 1 is a figure illustrating an example of a configuration of a communication control system 500 according to this embodiment.

The communication control system 500 includes a plurality of control devices 100 that communicate via a 5G network and a plurality of controlled devices 200 respectively controlled by the plurality of control devices 100.

The communication control system 500 is, for example, an industrial system composed of PLCs.

Each of the PLCs is the control device 100 that controls the controlled device 200, which is a device such as a line or a robot.

If an anomaly, such as a behavior that will cause an injury to a worker or an unexpected behavior of a worker, occurs in the device such as a line or a robot to be controlled, each of the PLCs causes an emergency stop in the device such as a line or a robot to be controlled. In the PLCs constituting the industrial system, ranges to be affected, if an anomaly occurs, by the anomaly are set as groups. These groups are identified by identifiers, and are set in the PLCs in advance. These identifiers will be hereinafter referred to as emergency stop group numbers, and they are represented by numbers for convenience in this embodiment.

If a PLC detects an anomaly, the PLC transmits a message indicating an emergency stop group number to all the other PLCs. Each PLC that has received this message compares an emergency stop group number set in emergency stop group information with the emergency stop group number indicated in the message. If they are the same, each PLC causes the device such as a line or a robot controlled by the PLC itself to make an emergency stop. If they are different, each PLC continues control of the device such as a line or a robot.

In 5G, there is a function called network slicing. For applications that connect to the 5G network, various cases are considered such as those that require large-capacity communication or those that require low-latency communication. In network slicing, a UPF appropriate for the required communication quality can be defined for each application.

In this embodiment, the emergency stop group numbers and the network slicing function are utilized. Specifically, UPFs corresponding to the emergency stop group numbers constitute a network that transfers data of the PLCs.

As illustrated in Fig. 1, the communication control system 500 includes the control devices 100, the controlled devices 200, RANs 300, and a 5G core 400.

In Fig. 1, four control devices 100, which are control devices 100_1, 100_2, 100_3, and 100_4, are illustrated as the control devices 100. Four controlled devices 200, which are controlled devices 200_1, 200_2, 200_3, and 200_4, are illustrated as the controlled devices 200. Two RANs 300, which are RANs 300_1 and 300_2, are illustrated as the RANs 300.

In the 5G core 400, two UPFs 400, which are UPFs 410_1 and 410_2, are illustrated as the UPFs 410.

Each or all of the control devices 100_1, 100_2, 100_3, and 100_4 may be referred to as the control device 100. Each or all of the controlled devices 200_1, 200_2, 200_3, and 200_4 may be referred to as the controlled device 200. Each or all of the RANs 300_1 and 300_2 may be referred to as the RAN 300. Each or all of the UPFs 410_1 and 410_2 may be referred to as the UPF 400.

Each of the control devices 100_1, 100_2, 100_3, and 100_4 controls the device such as a line or a robot. Specifically, the control devices 100_1, 100_2, 100_3, and 100_4 are connected respectively with the controlled devices 200_1, 200_2, 200_3, and 200_4. The controlled devices 200_1, 200_2, 200_3, and 200_4 are the devices such as lines or robots, and are the controlled devices of the PLCs.

The control device 100 is also called user equipment (UE).

An emergency stop group number 1 is defined for the control devices 100_1 and 100_2, and an emergency stop group number 2 is defined for the control devices 100_3 and 100_4.

An emergency stop group number is a group number assigned to an emergency stop group.

An emergency stop group is a group determined based on a range affected by an anomaly in each controlled device of the plurality of controlled devices 200.

In Fig. 1, the control devices 100_1 and 100_2 belong to the emergency stop group of the emergency stop group number 1, and the control devices 100_3 and 100_4 belong to the emergency stop group of the emergency stop group number 2.

Each of the RANs 300_1 and 300_2 is a radio access network in 5G, and functions as a base station.

In Fig. 1, the control devices 100_1 and 100_2 communicate with the RAN 300_1, and the control devices 100_3 and 100_4 communicate with the RAN 300_2.

The 5G core 400 corresponds to a core network in the 5G network.

The core network is generally composed of various functional groups. In this embodiment, only the following functions related to operation will be described.

The UPFs 410_1 and 410_2 are user plane functions in 5G. The UPFs 410_1 and 410_2 each have a function of transferring data transmitted from an end terminal connected to the 5G network to a destination indicated in the data.

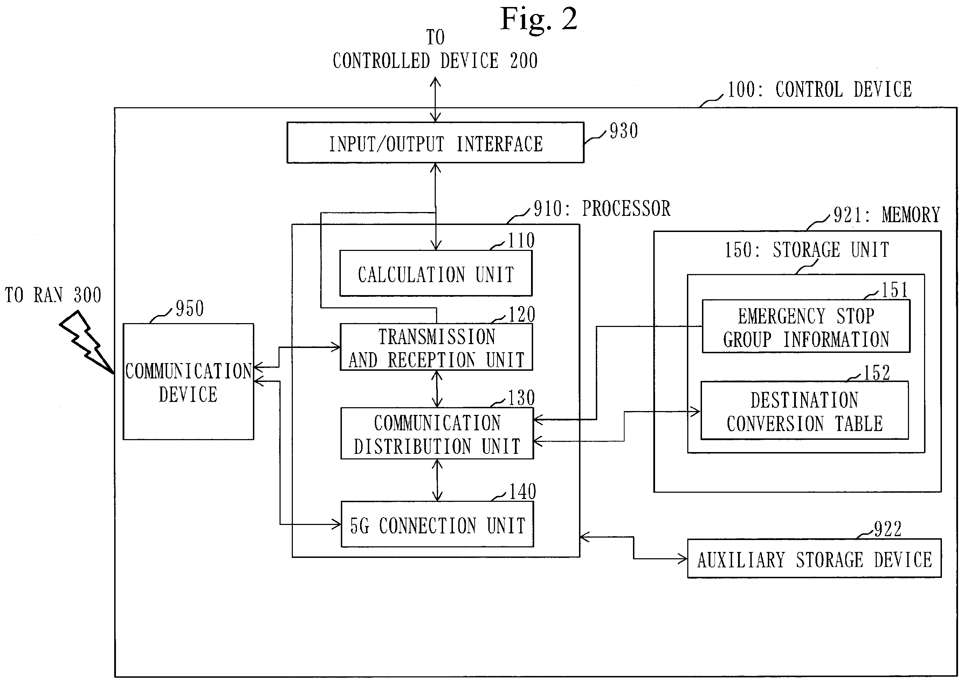

Fig. 2 is a figure illustrating an example of a configuration of the control device 100 according to this embodiment.

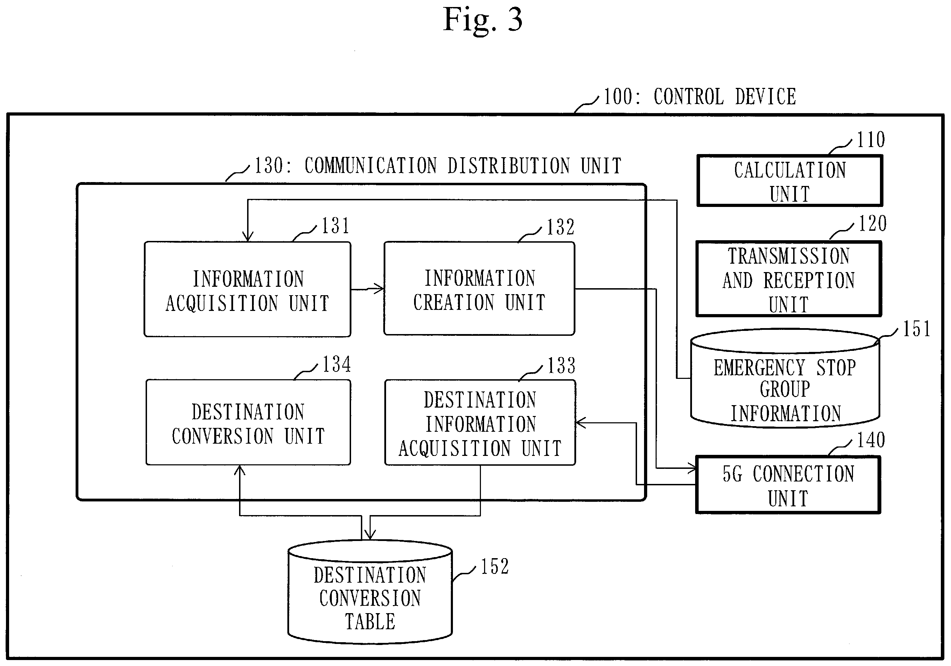

Fig. 3 is a figure illustrating an example of a detailed functional configuration of the control device 100 according to this embodiment.

The control device 100 is a computer. The control device 100 includes a processor 910, and also includes other hardware components such as a memory 921, an auxiliary storage device 922, an input/output interface 930, and a communication device 950. The processor 910 is connected with the other hardware components via signal lines, and controls these other hardware components.

The control device 100 includes, as functional elements, a calculation unit 110, a transmission and reception unit 120, a communication distribution unit 130, a 5G connection unit 140, and a storage unit 150. The storage unit 150 stores emergency stop group information 151 and a destination conversion table 152.

As illustrated in Fig. 3, the communication distribution unit 130 includes an information acquisition unit 131, an information creation unit 132, a destination information acquisition unit 133, and a destination conversion unit 134.

The functions of the calculation unit 110, the transmission and reception unit 120, the communication distribution unit 130, and the 5G connection unit 140 are realized by software. The storage unit 150 is provided in the memory 921. The storage unit 150 may be provided in the auxiliary storage device 922, or may be divided and provided in the memory 921 and the auxiliary storage device 922.

The processor 910 is a device that executes a communication control program. The communication control program is a program that realizes the functions of the calculation unit 110, the transmission and reception unit 120, the communication distribution unit 130, and the 5G connection unit 140.

The processor 910 is an integrated circuit (IC) that performs operational processing. Specific examples of the processor 910 are a central processing unit (CPU), a digital signal processor (DSP), and a graphics processing unit (GPU).

The memory 921 is a storage device to temporarily store data. Specific examples of the memory 921 are a static random access memory (SRAM) and a dynamic random access memory (DRAM).

The auxiliary storage device 922 is a storage device to store data. A specific example of the auxiliary storage device 922 is an HDD. Alternatively, the auxiliary storage device 922 may be a portable storage medium such as an SD (registered trademark) memory card, CF, a NAND flash, a flexible disk, an optical disc, a compact disc, a Blu-ray (registered trademark) disc, or a DVD. HDD is an abbreviation for hard disk drive. SD (registered trademark) is an abbreviation for Secure Digital. CF is an abbreviation for CompactFlash (registered trademark). DVD is an abbreviation for digital versatile disc.

The input/output interface 930 is a port that receives data from and transmits data to the controlled device 200, which is the device such as a line or a robot.

The input/output interface 930 may include, as an input interface, a port to be connected with an input device such as a mouse, a keyboard, or a touch panel. Specifically, the input interface is a Universal Serial Bus (USB) terminal. The input interface may be a port to be connected with a local area network (LAN).

The input/output interface 930 may include, as an output interface, a port to which a cable of an output device such as a display is to be connected. Specifically, the output interface is a USB terminal or a High Definition Multimedia Interface (HDMI, registered trademark) terminal. Specifically, the display is a liquid crystal display (LCD). The output interface is also called a display interface.

The communication device 950 is a wireless device for connecting to the 5G network.

The communication device 950 includes a receiver and a transmitter, and may be connected to a communication network such as a LAN, the Internet, or a telephone line. Specifically, the communication device 950 is a communication chip or a network interface card (NIC).

The communication control program is executed in the control device 100. The communication control program is read into the processor 910 and executed by the processor 910. The memory 921 stores not only the communication control program but also an operating system (OS). The processor 910 executes the communication control program while executing the OS. The communication control program and the OS may be stored in the auxiliary storage device 922. The communication control program and the OS that are stored in the auxiliary storage device 922 are loaded into the memory 921 and executed by the processor 910. Part or the entirety of the communication control program may be embedded in the OS.

The control device 100 may include a plurality of processors as an alternative to the processor 910. These processors share execution of the communication control program. Each of the processors is a device that executes the communication control program, like the processor 910.

Data, information, signal values, and variable values that are used, processed, or output by the communication control program are stored in the memory 921, the auxiliary storage device 922, a register in the processor 910, or a cache memory in the processor 910.

"Unit" in each of the calculation unit 110, the transmission and reception unit 120, the communication distribution unit 130, and the 5G connection unit 140 may be interpreted as "circuit", "step", "procedure", "process", or "circuitry". The communication control program causes a computer to execute a calculation process, a transmission and reception process, a communication distribution process, and a 5G connection process. "Process" in each of the calculation process, the transmission and reception process, the communication distribution process, and the 5G connection process may be interpreted as "program", "program product", "computer readable storage medium storing a program", or "computer readable recording medium recording a program". A communication control method is a method performed by execution of the communication control program by the control device 100.

The communication control program may be stored and provided in a computer readable recording medium. Alternatively, the communication control program may be provided as a program product.

### *** Description of Functions ***

The calculation unit 110 acquires settings and an operating status of the controlled device 200, calculates a control signal to control operation of the controlled device 200, and outputs a calculation result to the controlled device 200.

The transmission and reception unit 120 transmits and receives control signals for other control devices 100 or the controlled device 200.

In the emergency stop group information 151, each control device of the plurality of control devices 100 is associated with an emergency stop group number assigned to an emergency stop group. That is, in the emergency stop group information 151, the emergency stop group number defined for each control device 100 is stored. In the example in Fig. 1, the emergency stop group number 1 is defined for the control devices 100_1 and 100_2, and the emergency stop group number 2 is defined for the control devices 100_3 and 100_4.

The communication distribution unit 130 is also referred to as a data communication distribution function.

The information acquisition unit 131 acquires the emergency stop group numbers from the emergency stop group information 151. The information acquisition unit 131 is also referred to as an emergency stop group acquisition unit.

The information creation unit 132 calculates the total number of emergency stop groups based on the emergency stop group numbers, and creates slice information for connecting to the same number of UPFs as the total number of emergency stop groups. Specifically, the information creation unit 132 creates the slice information that is required, when the control device 100 joins the 5G network, for connecting to the same number of UPFs as the total number of emergency stop group numbers or for setting up the same number of UPFs as the total number of emergency stop group numbers. Then, the information creation unit 132 outputs the slice information to the 5G connection unit 140. The information creation unit 132 is also referred to as a slice information creation unit.

The 5G connection unit 140 registers its own control device with the 5G network based on the slice information, and acquires UPF destination information, which is destination information of the UPFs. When the 5G connection unit 140 registers its own control device with the 5G network, the UPF destination information is issued from the 5G core 400.

The destination information acquisition unit 133 acquires the UPF destination information issued from the 5G core 400, and associates each emergency stop group number with UPF destination information without duplication of a destination UPF between emergency stop groups, and stores association information in the destination conversion table 152.

The destination conversion unit 134 refers to the destination conversion table 152, and converts destination information of data so that the UPF corresponding to the emergency stop group number to which its own control device belongs is the destination.

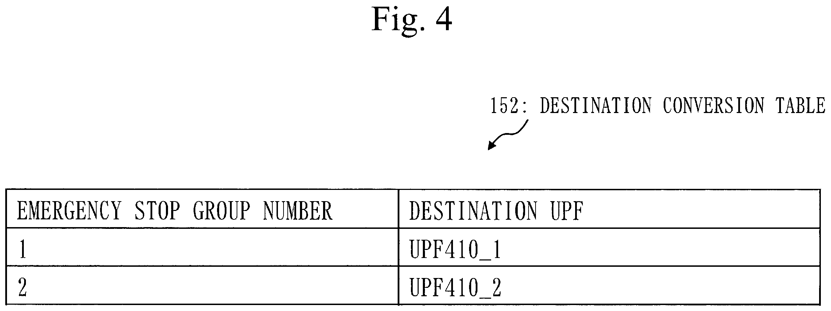

Fig. 4 is a diagram illustrating an example of arrangement of the destination conversion table 152 according to this embodiment.

The destination conversion table 152 is stored in a format such that each emergency stop group number is associated with UPF destination information.

In Fig. 4, the UPF 410_1 is set as the destination UPF for the emergency stop group number 1. Specifically, UPF destination information of the UPF 410_1 is set for the emergency stop group number 1. The UPF 410_2 is set as the destination UPF for the emergency stop group number 2. Specifically, UPF destination information of the UPF 410_2 is set for the emergency stop group number 2.

### *** Description of Operation ***

The operation of the control device 100 according to this embodiment will now be described. A procedure for the operation of the control device 100 is equivalent to the communication control method. A program that realizes the operation of the control device 100 is equivalent to the communication control program. The communication control program causes the control device 100, which is a computer, to execute a communication control process.

The communication control process of the control device 100 according to this embodiment includes a procedure A, a procedure B, and a procedure C.

In the procedure A, connection is made to the 5G network based on the emergency stop groups that are set in the control device 100 in advance.

In the procedure B, information for converting the destination is stored in the destination conversion table 152 so that data can be transferred to the UPF corresponding to the emergency stop group.

In the procedure C, destination information of data to be transmitted by the control device 100 via 5G is converted based on the information stored in the procedure B.

### <Procedure A>

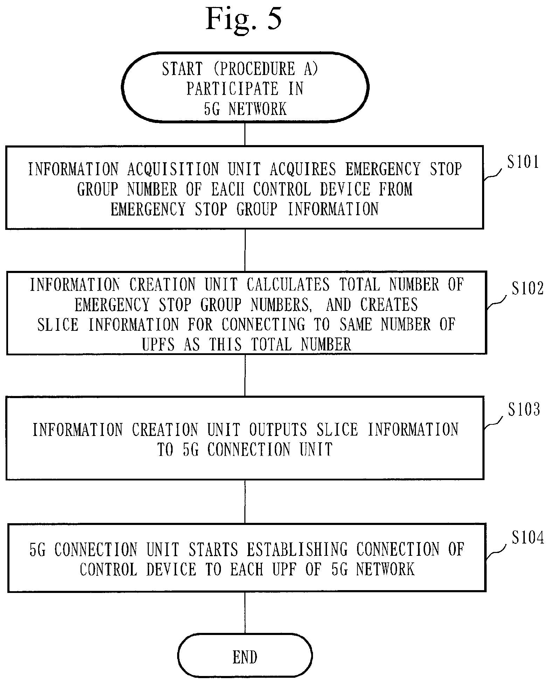

Fig. 5 is a figure illustrating an operational flow of the procedure A in the control device 100 according to this embodiment.

When the control device 100 starts participating in the 5G network, processing of step S101 is started.

In a specific example, the operation of the control device 100_1 of Fig. 1 will be described.

In step S101, the information acquisition unit 131 acquires, from the emergency stop group information 151, the emergency stop group numbers that are set in the emergency stop group information 151. Specifically, the information acquisition unit 131 acquires, from the emergency stop group information 151, the emergency stop group numbers that are defined for the control device 100_1 to the control device 100_4.

In the specific example, the information acquisition unit 131 acquires the emergency stop group numbers 1 and 2.

In step S102, the information creation unit 132 calculates the total number of emergency stop groups based on the emergency stop group numbers, and creates slice information for connecting to the same number of UPFs as the total number of emergency stop groups.

In the specific example, the information creation unit 132 calculates the total number of emergency stop groups as two based on the acquired emergency stop group numbers 1 and 2. Then, the information creation unit 132 creates slice information for connecting to the two UPFs.

In step S103, the information creation unit 132 outputs the slice information created in step S102 to the 5G connection unit 140.

In step S104, the 5G connection unit 140 connects its own control device to the 5G network based on the slice information.

In the specific example, the 5G connection unit 140 registers the control device 100_1 with the 5G network based on the slice information, and establishes connection to the UPFs 410_1 and 410 2.

### <Procedure B>

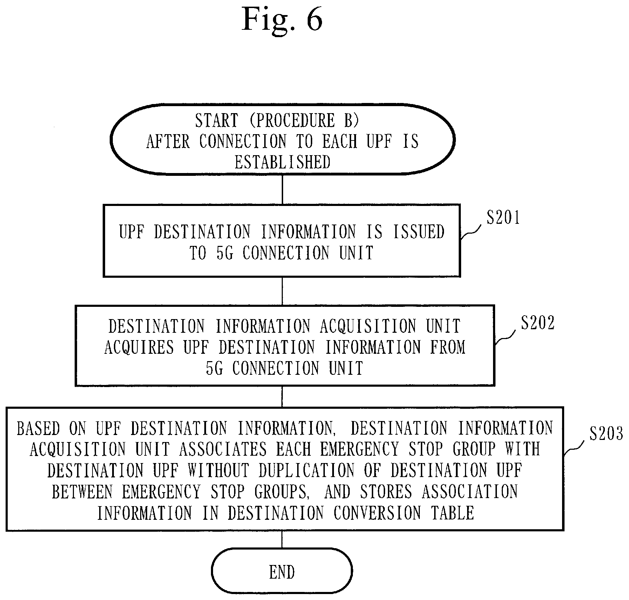

Fig. 6 is a figure illustrating an operational flow of the procedure B in the control device 100 according to this embodiment.

The procedure B is performed after the connection between the control device 100 and the UPF is established.

In step S201, UPF destination information, which is destination information of the UPF 410 in the 5G core 400, is issued from the 5G core 400 to the 5G connection unit 140. The 5G connection unit 140 acquires the UPF destination information issued from the 5G core 400.

In step S202, the destination information acquisition unit 133 acquires the UPF destination information issued in step S201 through the 5G connection unit 140.

In step S203, the destination information acquisition unit 133 stores, in the destination conversion table 152, information in which each emergency stop group number is associated with a destination UPF, based on the UPF destination information, without duplication of a destination UPF between emergency stop groups. Specifically, based on the UPF destination information acquired in step S202, the destination information acquisition unit 133 associates each emergency stop group number with UPF destination information of a destination UPF without duplication of the UPF 410_1 or 410_2 to be the destination between the emergency stop group numbers 1 and 2.

In the specific example, the destination information acquisition unit 133 stores, in the destination conversion table 152, information in which UPF destination information of the UPF 410_1 is associated with the emergency stop group number 1 and UPF destination information of the UPF 410_2 is associated with the emergency stop group number 2.

### <Procedure C>

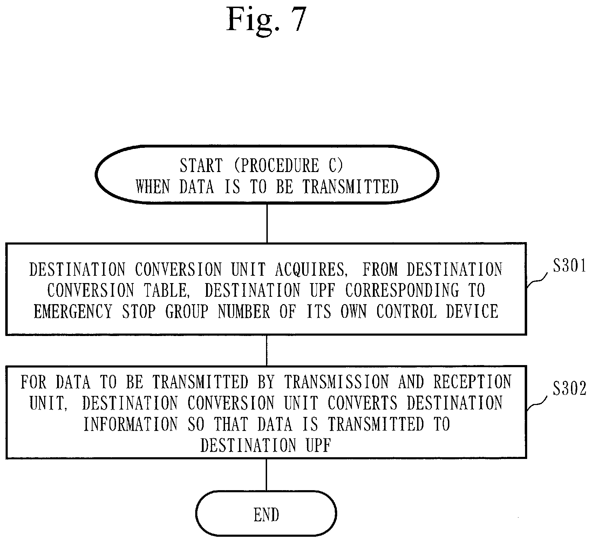

Fig. 7 is a figure illustrating an operational flow of the procedure C in the control device 100 according to this embodiment.

The procedure C is performed when the control device 100 is to transmit data to another control device after the procedure A and the procedure B. In the specific example, a case will be described where the control device 100_1 transmits data to one of the control device 100_2 to the control device 100_4, which are other control devices.

In step S301, when data is to be transmitted to another control device, the destination conversion unit 134 converts the destination information of the data so that the data is transmitted to the destination UPF corresponding to the emergency stop group to which its own control device 100 belongs, based on the destination conversion table 152.

Specifically, the destination conversion unit 134 acquires, from the destination conversion table 152, UPF destination information of the destination UPF corresponding to the emergency stop group number of the emergency stop group to which its own control device 100 belongs.

In the specific example, the destination conversion unit 134 acquires, as the destination UPF, UPF destination information of the UPF 410_1 corresponding to the emergency stop group number 1 of the emergency stop group to which its own control device 100_1 belongs.

In step S302, for the data to be transmitted by the transmission and reception unit 120, the destination conversion unit 134 converts the destination information of the data so that the data is transmitted to the destination UPF obtained in step S301.

In the specific example, using the UPF destination information of the UPF 410_1, the destination conversion unit 134 converts the destination information of the data so that the data is transmitted to the UPF 410_1.

Then, the transmission and reception unit 120 transmits the data based on the destination information of the data.

As described above, the control device 100 according to this embodiment realizes a configuration in which the procedure A, the procedure B, and the procedure C are taken so that the UPF corresponding to the emergency stop group transfers data. This makes it possible to avoid a situation where a UPF on a 5G network becomes a single point of failure in an industrial system. Even if a failure occurs in a UPF, the impact of the failure can be limited to the range of the emergency stop group corresponding to the UPF where the failure has occurred.

### *** Other Configurations ***

In this embodiment, the functions of the calculation unit 110, the transmission and reception unit 120, the communication distribution unit 130, and the 5G connection unit 140 are realized by software. As a variation, the functions of the calculation unit 110, the transmission and reception unit 120, the communication distribution unit 130, and the 5G connection unit 140 may be realized by hardware.

Specifically, the control device 100 includes an electronic circuit 909 in place of the processor 910.

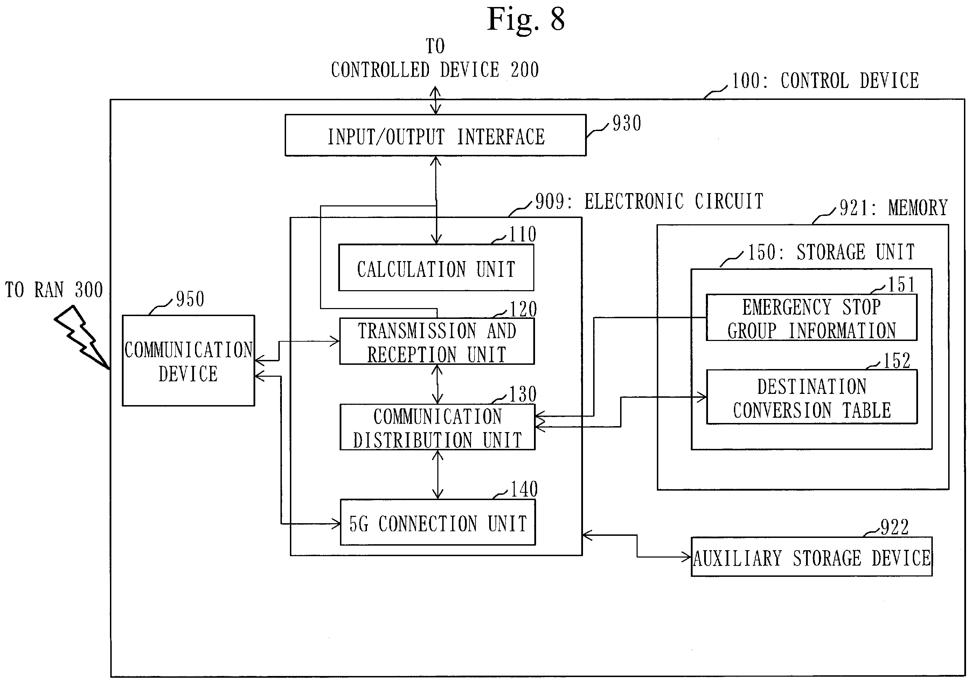

Fig. 8 is a figure illustrating an example of the configuration of the control device 100 according to a variation of this embodiment.

The electronic circuit 909 is a dedicated electronic circuit that realizes the functions of the calculation unit 110, the transmission and reception unit 120, the communication distribution unit 130, and the 5G connection unit 140. Specifically, the electronic circuit 909 is a single circuit, a composite circuit, a programmed processor, a parallel-programmed processor, a logic IC, a GA, an ASIC, or an FPGA. GA is an abbreviation for Gate Array. ASIC is an abbreviation for Application Specific Integrated Circuit. FPGA is an abbreviation for Field-Programmable Gate Array.

The functions of the calculation unit 110, the transmission and reception unit 120, the communication distribution unit 130, and the 5G connection unit 140 may be realized by one electronic circuit, or may be distributed to and realized by a plurality of electronic circuits.

As another variation, some of the functions of the calculation unit 110, the transmission and reception unit 120, the communication distribution unit 130, and the 5G connection unit 140 may be realized by the electronic circuit, and the rest of the functions may be realized by software. Alternatively, some or all of the functions of the calculation unit 110, the transmission and reception unit 120, the communication distribution unit 130, and the 5G connection unit 140 may be realize by firmware.

Each of the processor and the electronic circuit is also referred to as processing circuitry. That is, the functions of the calculation unit 110, the transmission and reception unit 120, the communication distribution unit 130, and the 5G connection unit 140 are realized by the processing circuitry.

### *** Description of Effect of the Embodiment ***

As described above, the control device 100 according to this embodiment realizes a configuration in which a UPF corresponding to an emergency stop group transfers data. This makes it possible to avoid a situation where a UPF on a 5G network becomes a single point of failure in an industrial system. Even if a failure occurs in a UPF, the impact of the failure can be limited to the range of the emergency stop group corresponding to the UPF where the failure has occurred. Therefore, according to the control device 100 of this embodiment, an effect of improving fault tolerance of an industrial system can be obtained.

In Embodiment 1 above, each unit of the control device is described as an independent functional block. However, the configuration of the control device may be different from the configuration in the embodiment above. The functional blocks of the control device may be arranged in any configuration, provided that the functions described in the embodiment above can be realized. The control device may be a system composed of a plurality of devices, instead of a single device.

Portions of Embodiment 1 may be implemented in combination.
Alternatively, one portion of this embodiment may be implemented. Alternatively, this embodiment may be implemented as a whole or partially in any combination.

That is, in Embodiment 1, Embodiment 1 can be freely combined, any constituent element of Embodiment 1 can be modified, or any constituent element may be omitted in Embodiment 1.

The embodiment described above is an essentially preferable example, and is not intended to limit the scope of the present disclosure, the scope of applications of the present disclosure, and the scope of uses of the present disclosure. The embodiment described above can be modified in various ways as needed.

### Reference Signs List

100, 100_1, 100_2, 100_3, 100_4: control device; 110: calculation unit; 120: transmission and reception unit; 130: communication distribution unit; 131: information acquisition unit; 132: information creation unit; 133: destination information acquisition unit; 134: destination conversion unit; 140: 5G connection unit; 150: storage unit; 151: emergency stop group information; 152: destination conversion table; 200, 200_1, 200_2, 200_3, 200_4: controlled device; 300, 300_1, 300_2: RAN; 400: 5G core; 410, 410_1, 410_2: UPF; 500: communication control system; 909: electronic circuit; 910: processor; 921: memory; 922: auxiliary storage device; 930: input/output interface; 950: communication device.

## Claims

1. A communication control system (500) including a plurality of control devices (100) configured to communicate via a fifth-generation mobile communication system , 5G,
network and a plurality of controlled devices (200) respectively controlled by the plurality of control devices (100),
wherein each control device (100) of the plurality of control devices (100) comprises
an information creation unit (132) configured to calculate a total number of emergency stop groups based on emergency stop group information in which each emergency stop group number assigned to each emergency stop group that is determined based on a range to be affected by an anomaly in each controlled device (200) of the plurality of controlled devices (200) is associated with each corresponding control device (100) of the plurality of control devices (100), and create slice information for connecting to the same number of user plane functions, UPFs,
as the total number of emergency stop groups;
a 5G connection unit (140) configured to register the control device (100) of the 5G connection unit (140) itself with the 5G network, and acquire UPF destination information, which is destination information of the UPFs; and
a destination information acquisition unit (133) configured to, based on the UPF destination information, associate each emergency stop group number with a destination UPF without duplication of a destination UPF between the emergency stop groups, and store information in which each emergency stop group number is associated with a destination UPF in a destination conversion table.

2. The communication control system (500) according to claim 1,
wherein each control device (100) of the plurality of control devices (100) comprises
a destination conversion unit (134) configured to, when data is to be transmitted to another control device (100), convert destination information of the data so as to cause the data to be transmitted to a UPF corresponding to the emergency stop group to which the control device (100) of the destination conversion unit (134) itself belongs, based on the destination conversion table; and
a transmission and reception unit (120) configured to transmit the data, based on the destination information of the data.

3. The communication control system (500) according to claim 1 or claim 2,
wherein each control device (100) of the plurality of control devices (100) comprises
an information acquisition unit (131) configured to acquire emergency stop group numbers that are set in the emergency stop group information, and
wherein the information creation unit (132) is configured to calculate the total number of emergency stop groups, based on the emergency stop group numbers.

4. A control device (100) included in a communication control system (500), the communication control system (500) including a plurality of control devices (100) configured to communicate via a 5G network and a plurality of controlled devices (200) respectively controlled by the plurality of control devices (100), the control device (100) comprising:
an information creation unit (132) configured to calculate a total number of emergency stop groups based on emergency stop group information in which each emergency stop group number assigned to each emergency stop group that is determined based on a range to be affected by an anomaly in each controlled device (200) of the plurality of controlled devices (200) is associated with each corresponding control device (100) of the plurality of control devices (100), and create slice information for connecting to the same number of user plane functions UPFs, as the total number of emergency stop groups;
a 5G connection unit (140) configured to register the control device (100) of the 5G connection unit (140) itself with the 5G network, and acquire UPF destination information, which is destination information of the UPFs; and
a destination information acquisition unit (133) configured to, based on the UPF destination information, associate each emergency stop group number with a destination UPF without duplication of a destination UPF between the emergency stop groups, and store information in which each emergency stop group number is associated with a destination UPF in a destination conversion table.

5. The control device (100) according to claim 4, further comprising:
a destination conversion unit (134) configured to, when data is to be transmitted to another control device (100), convert destination information of the data so as to cause the data to be transmitted to a UPF corresponding to the emergency stop group to which the control device (100) of the destination conversion unit (134) itself belongs, based on the destination conversion table; and
a transmission and reception unit (120) configured to transmit the data, based on the destination information of the data.

6. The control device (100) according to claim 4 or claim 5, further comprising
an information acquisition unit (131) configured to acquire emergency stop group numbers that are set in the emergency stop group information,
wherein the information creation unit (132) is configured to calculate the total number of emergency stop groups, based on the emergency stop group numbers.

7. A communication control method used in a communication control system (500) including a plurality of control devices (100) configured to communicate via a fifth-generation mobile communication system, 5G, network and a plurality of controlled devices (200) respectively controlled by the plurality of control devices (100), the communication control method comprising:
calculating a total number of emergency stop groups based on emergency stop group information in which each emergency stop group number assigned to each emergency stop group that is determined based on a range to be affected by an anomaly in each controlled device (200) of the plurality of controlled devices (200) is associated with each corresponding control device (100) of the plurality of control devices (100), and creating slice information for connecting to the same number of user plane functions, UPFs,
as the total number of emergency stop groups, by a computer;
registering a control device (100) of the computer itself with the 5G network, and acquiring UPF destination information, which is destination information of the UPFs, by the computer; and
associating, based on the UPF destination information, each emergency stop group number with a destination UPF without duplication of a destination UPF between the emergency stop groups, and storing information in which each emergency stop group number is associated with a destination UPF in a destination conversion table, by the computer.

8. A communication control program used in a communication control system (500) including a plurality of control devices (100) configured to communicate via a fifth-generation mobile communication system, 5G, network and a plurality of controlled devices (200) respectively controlled by the plurality of control devices (100), the communication control program causing a computer to execute:
an information creation process of calculating a total number of emergency stop groups based on emergency stop group information in which each emergency stop group number assigned to each emergency stop group that is determined based on a range to be affected by an anomaly in each controlled device (200) of the plurality of controlled devices (200) is associated with each corresponding control device (100) of the plurality of control devices (100), and creating slice information for connecting to the same number of user plane functions, UPFs,
as the total number of emergency stop groups;
a 5G connection process of registering a control device (100) of the 5G connection process itself with the 5G network, and acquiring UPF destination information, which is destination information of the UPFs; and
a destination information acquisition process of, based on the UPF destination information, associating each emergency stop group number with a destination UPF without duplication of a destination UPF between the emergency stop groups, and storing information in which each emergency stop group number is associated with a destination UPF in a destination conversion table.

## Patentansprüche

1. Kommunikationssteuerungssystem (500), enthaltend eine Vielzahl von Steuerungseinrichtungen (100), die eingerichtet sind, über ein Mobilkommunikationssystemnetz der fünften Generation, 5G, zu kommunizieren, und eine Vielzahl von gesteuerten Einrichtungen (200), die jeweils von der Vielzahl von Steuerungseinrichtungen (100) gesteuert werden,
wobei jede Steuerungseinrichtung (100) der Vielzahl von Steuerungseinrichtungen (100) umfasst:
eine Informationserstellungseinheit (132), die eingerichtet ist, eine Gesamtanzahl von Not-Stopp-Gruppen auf der Grundlage von Not-Stopp-Gruppeninformationen zu berechnen, in denen jede Not-Stopp-Gruppennummer, die jeder Not-Stopp-Gruppe zugewiesen ist, die auf der Grundlage eines Bereichs in jeder gesteuerten Einrichtung (200) der Vielzahl von gesteuerten Einrichtungen (200) als von einer Anomalie betroffen zu sein bestimmt ist, jeder entsprechenden Steuerungseinrichtung (100) der Vielzahl von Steuerungseinrichtungen (100) zugeordnet ist, und Slice-Informationen zum Verbinden mit der gleichen Anzahl von Benutzerebenenfunktionen, UPFs, wie die Gesamtanzahl von Not-Stopp-Gruppen zu erstellen;
eine 5G-Verbindungseinheit (140), die eingerichtet ist, die Steuerungseinrichtung (100) der 5G-Verbindungseinheit (140) selbst in dem 5G-Netz zu registrieren, und UPF-Zielinformationen, welche Zielinformationen der UPFs sind, zu erwerben; und
eine Zielinformationserwerbungseinheit (133), die eingerichtet ist, auf der Grundlage der UPF-Zielinformationen jede Not-Stopp-Gruppennummer einer Ziel-UPF ohne Duplizierung einer Ziel-UPF zwischen den Not-Stopp-Gruppen zuzuordnen, und Informationen, in denen jede Not-Stopp-Gruppennummer einer Ziel-UPF zugeordnet ist, in einer Zielkonvertierungstabelle zu speichern.

2. Kommunikationssteuerungssystem (500) nach Anspruch 1,
wobei jede Steuerungseinrichtung (100) der Vielzahl von Steuerungseinrichtungen (100) umfasst:
eine Zielkonvertierungseinheit (134), die eingerichtet ist, wenn Daten an eine andere Steuerungseinrichtung (100) zu übertragen sind, Zielinformationen der Daten zu konvertieren, um zu veranlassen, dass die Daten an eine UPF übertragen werden, die der Not-Stopp-Gruppe entspricht, zu der die Steuerungseinrichtung (100) der Zielkonvertierungseinheit (134) selbst gehört, auf der Grundlage der Zielkonvertierungstabelle; und
eine Übertragungs- und Empfangseinheit (120), die eingerichtet ist, die Daten auf der Grundlage der Zielinformationen der Daten zu übertragen.

3. Kommunikationssteuerungssystem (500) nach Anspruch 1 oder Anspruch 2,
wobei jede Steuerungseinrichtung (100) der Vielzahl von Steuerungseinrichtungen (100) umfasst:
eine Informationserwerbungseinheit (131), die eingerichtet ist, Not-Stopp-Gruppennummern, die in den Not-Stopp-Gruppeninformationen festgelegt sind, zu erwerben, und
wobei die Informationserstellungseinheit (132) eingerichtet ist, die Gesamtanzahl der Not-Stopp-Gruppen auf der Grundlage der Not-Stopp-Gruppennummern zu berechnen.

4. Steuerungseinrichtung (100), die in einem Kommunikationssteuerungssystem (500) enthalten ist, wobei das Kommunikationssteuerungssystem (500) eine Vielzahl von Steuerungseinrichtungen (100) enthält, die eingerichtet sind, über ein 5G-Netz und eine Vielzahl von gesteuerten Einrichtungen (200), die jeweils durch die Vielzahl von Steuerungseinrichtungen (100) gesteuert werden, zu kommunizieren, wobei die Steuerungseinrichtung (100) umfasst:
eine Informationserstellungseinheit (132), die eingerichtet ist, eine Gesamtanzahl von Not-Stopp-Gruppen auf der Grundlage von Not-Stopp-Gruppeninformationen zu berechnen, in denen jede Not-Stopp-Gruppennummer, die jeder Not-Stopp-Gruppe zugewiesen ist, die auf der Grundlage eines Bereichs in jeder gesteuerten Einrichtung (200) der Vielzahl von gesteuerten Einrichtungen (200) als von einer Anomalie betroffen zu sein bestimmt ist, jeder entsprechenden Steuerungseinrichtung (100) der Vielzahl von Steuerungseinrichtungen (100) zugeordnet ist, und Slice-Informationen zum Verbinden mit der gleichen Anzahl von Benutzerebenenfunktionen, UPFs, wie die Gesamtanzahl von Not-Stopp-Gruppen zu erstellen;
eine 5G-Verbindungseinheit (140), die eingerichtet ist, die Steuerungseinrichtung (100) der 5G-Verbindungseinheit (140) selbst in dem 5G-Netz zu registrieren, und UPF-Zielinformationen, welche Zielinformationen der UPFs sind, zu erwerben; und
eine Zielinformationserwerbungseinheit (133), die eingerichtet ist, auf der Grundlage der UPF-Zielinformationen jede Not-Stopp-Gruppennummer einer Ziel-UPF ohne Duplizierung einer Ziel-UPF zwischen den Not-Stopp-Gruppen zuzuordnen, und Informationen, in denen jede Not-Stopp-Gruppennummer einer Ziel-UPF zugeordnet ist, in einer Zielkonvertierungstabelle zu speichern.

5. Steuerungseinrichtung (100) nach Anspruch 4, ferner umfassend:
eine Zielkonvertierungseinheit (134), die eingerichtet ist, wenn Daten an eine andere Steuerungseinrichtung (100) zu übertragen sind, Zielinformationen der Daten zu konvertieren, um zu veranlassen, dass die Daten an eine UPF übertragen werden, die der Not-Stopp-Gruppe entspricht, zu der die Steuerungseinrichtung (100) der Zielkonvertierungseinheit (134) selbst gehört, auf der Grundlage der Zielkonvertierungstabelle; und
eine Übertragungs- und Empfangseinheit (120), die eingerichtet ist, die Daten auf der Grundlage der Zielinformationen der Daten zu übertragen.

6. Steuerungseinrichtung (100) nach Anspruch 4 oder Anspruch 5, ferner umfassend:
eine Informationserwerbungseinheit (131), die eingerichtet ist, Not-Stopp-Gruppennummern, die in den Not-Stopp-Gruppeninformationen festgelegt sind, zu erwerben,
wobei die Informationserstellungseinheit (132) eingerichtet ist, die Gesamtanzahl der Not-Stopp-Gruppen auf der Grundlage der Not-Stopp-Gruppennummern zu berechnen.

7. Kommunikationssteuerungsverfahren, das in einem Kommunikationssteuersystem (500) genutzt wird, enthaltend eine Vielzahl von Steuerungseinrichtungen (100), die eingerichtet sind, über ein Mobilkommunikationssystemnetz der fünften Generation, 5G, zu kommunizieren, und eine Vielzahl von gesteuerten Einrichtungen (200), die jeweils von der Vielzahl von Steuerungseinrichtungen (100) gesteuert werden, wobei das Kommunikationssteuerungsverfahren umfasst:
Berechnen einer Gesamtanzahl von Not-Stopp-Gruppen auf der Grundlage von Not-Stopp-Gruppeninformationen, in denen jede Not-Stopp-Gruppennummer, die jeder Not-Stopp-Gruppe zugewiesen ist, die auf der Grundlage eines Bereichs in jeder gesteuerten Einrichtung (200) der Vielzahl von gesteuerten Einrichtungen (200) als von einer Anomalie betroffen zu sein bestimmt ist, jeder entsprechenden Steuerungseinrichtung (100) der Vielzahl von Steuerungseinrichtungen (100) zugeordnet ist, und Erstellen von Slice-Informationen zum Verbinden der gleichen Anzahl von Benutzerebenenfunktionen, UPFs, als die Gesamtanzahl von Not-Stopp-Gruppen, durch einen Computer;
Registrieren einer Steuerungseinrichtung (100) des Computers selbst mit dem 5G-Netz, und Erwerben von UPF-Zielinformationen, die Zielinformationen der UPFs sind, durch den Computer; und
Zuordnen, auf der Grundlage der UPF-Zielinformationen, jeder Not-Stopp-Gruppennummer mit einer Ziel-UPF ohne Duplizierung einer Ziel-UPF zwischen den Not-Stopp-Gruppen, und Speichern von Informationen, in denen jede Not-Stopp-Gruppennummer einer Ziel-UPF zugeordnet ist, in einer Zielkonvertierungstabelle, durch den Computer.

8. Kommunikationssteuerungsprogramm, das in einem Kommunikationssteuersystem (500) genutzt wird, enthaltend eine Vielzahl von Steuerungseinrichtungen (100), die eingerichtet sind, über ein Mobilkommunikationssystemnetz der fünften Generation, 5G, zu kommunizieren, und eine Vielzahl von gesteuerten Einrichtungen (200), die jeweils von der Vielzahl von Steuerungseinrichtungen (100) gesteuert werden, wobei das Kommunikationssteuerungsprogramm einen Computer veranlasst, auszuführen:
einen Informationserstellungsprozess des Berechnens einer Gesamtanzahl von Not-Stopp-Gruppen auf der Grundlage von Not-Stopp-Gruppeninformationen, in denen jede Not-Stopp-Gruppennummer, die jeder Not-Stopp-Gruppe zugewiesen ist, die auf der Grundlage eines Bereichs in jeder gesteuerten Einrichtung (200) der Vielzahl von gesteuerten Einrichtungen (200) als von einer Anomalie betroffen zu sein bestimmt ist, jeder entsprechenden Steuereinrichtung (100) der Vielzahl von Steuereinrichtungen (100) zugeordnet ist, und Erstellens von Slice-Informationen zum Verbinden der gleichen Anzahl von Benutzerebenenfunktionen, UPFs, als die Gesamtanzahl von Not-Stopp-Gruppen;
einen 5G-Verbindungsprozess des Registrierens einer Steuerungseinrichtung (100) des 5G-Verbindungsprozesses selbst mit dem 5G-Netz, und Erwerbens von UPF-Zielinformationen, die Zielinformationen der UPFs sind; und
einen Zielinformationserwerbungsprozess des, auf der Grundlage der UPF-Zielinformationen, Zuordnens jeder Not-Stopp-Gruppenzahl zu einer Ziel-UPF ohne Duplizierung einer Ziel-UPF zwischen den Not-Stopp-Gruppen, und Speicherns von Informationen, in denen jede Not-Stopp-Gruppennummer einer Ziel-UPF zugeordnet ist, in einer Zielkonvertierungstabelle.

## Revendications

1. Système de commande de communication (500) comprenant une pluralité de dispositifs de commande (100) configurés pour communiquer via un système de communication mobile de cinquième génération, un réseau 5G et une pluralité de dispositifs commandés (200), respectivement commandés par la pluralité de dispositifs de commande (100),
dans lequel chaque dispositif de commande (100) de la pluralité de dispositifs de commande (100) comprend
une unité de création d'informations (132) configurée pour calculer un nombre total de groupes d'arrêt d'urgence sur la base d'informations de groupes d'arrêt d'urgence dans lesquelles chaque numéro de groupe d'arrêt d'urgence attribué à chaque groupe d'arrêt d'urgence qui est déterminé sur la base d'une plage devant être affecté par une anomalie dans chaque dispositif commandé (200) de la pluralité de dispositifs commandés (200) est associé à chaque dispositif de commande correspondant (100) de la pluralité de dispositifs de commande (100), et créer des informations de tranche pour se connecter au même nombre de fonctions de plan d'utilisateur, UPF, que le nombre total de groupes d'arrêt d'urgence ;
une unité de connexion 5G (140) configurée pour enregistrer le dispositif de commande (100) de l'unité de connexion 5G (140) elle-même avec le réseau 5G, et acquérir des informations de destination d'UPF, qui sont des informations de destination des UPF ; et
une unité d'acquisition d'informations de destination (133) configurée pour, sur la base des informations de destination d'UPF, associer chaque numéro de groupe d'arrêt d'urgence à une UPF de destination sans duplication d'une UPF de destination entre les groupes d'arrêt d'urgence, et stocker des informations dans lesquelles chaque numéro de groupe d'arrêt d'urgence est associé à une UPF de destination dans une table de conversion de destination.

2. Système de commande de communication (500) selon la revendication 1,
dans lequel chaque dispositif de commande (100) de la pluralité de dispositifs de commande (100) comprend
une unité de conversion de destination (134) configurée pour, lorsque des données doivent être transmises à un autre dispositif de commande (100), convertir des informations de destination des données de manière à amener les données à être transmises à une UPF correspondant au groupe d'arrêt d'urgence auquel le dispositif de commande (100) de l'unité de conversion de destination (134) appartient lui-même, sur la base de la table de conversion de destination ; et
une unité de transmission et de réception (120) configurée pour transmettre les données, sur la base des informations de destination des données.

3. Système de commande de communication (500) selon la revendication 1 ou 2,
dans lequel chaque dispositif de commande (100) de la pluralité de dispositifs de commande (100) comprend
une unité d'acquisition d'informations (131) configurée pour acquérir des numéros de groupe d'arrêt d'urgence qui sont définis dans les informations de groupes d'arrêt d'urgence,
et dans lequel l'unité de création d'informations (132) est configurée pour calculer le nombre total de groupes d'arrêts d'urgence, sur la base des numéros de groupes d'arrêts d'urgence.

4. Dispositif de commande (100) inclus dans un système de commande de communication (500), le système de commande de communication (500) comprenant une pluralité de dispositifs de commande (100) configurés pour communiquer via un réseau 5G et une pluralité de dispositifs commandés (200), commandés respectivement par la pluralité de dispositifs de commande (100), le dispositif de commande (100) comprenant :
une unité de création d'informations (132) configurée pour calculer un nombre total de groupes d'arrêt d'urgence sur la base d'informations de groupes d'arrêt d'urgence dans lesquelles chaque numéro de groupe d'arrêt d'urgence attribué à chaque groupe d'arrêt d'urgence qui est déterminé sur la base d'une plage devant être affecté par une anomalie dans chaque dispositif commandé (200) de la pluralité de dispositifs commandés (200) est associé à chaque dispositif de commande correspondant (100) de la pluralité de dispositifs de commande (100), et créer des informations de tranche pour se connecter au même nombre de fonctions de plan d'utilisateur, UPF, que le nombre total de groupes d'arrêt d'urgence ;
une unité de connexion 5G (140) configurée pour enregistrer le dispositif de commande (100) de l'unité de connexion 5G (140) elle-même avec le réseau 5G, et acquérir des informations de destination d'UPF, qui sont des informations de destination des UPF ; et
une unité d'acquisition d'informations de destination (133) configurée pour, sur la base des informations de destination d'UPF, associer chaque numéro de groupe d'arrêt d'urgence à une UPF de destination sans duplication d'une UPF de destination entre les groupes d'arrêt d'urgence, et stocker des informations dans lesquelles chaque numéro de groupe d'arrêt d'urgence est associé à une UPF de destination dans une table de conversion de destination.

5. Dispositif de commande (100) selon la revendication 4, comprenant en outre :
une unité de conversion de destination (134) configurée pour, lorsque des données doivent être transmises à un autre dispositif de commande (100), convertir des informations de destination des données de manière à amener les données à être transmises à une UPF correspondant au groupe d'arrêt d'urgence auquel le dispositif de commande (100) de l'unité de conversion de destination (134) appartient lui-même, sur la base de la table de conversion de destination ; et
une unité de transmission et de réception (120) configurée pour transmettre les données, sur la base des informations de destination des données.

6. Dispositif de commande (100) selon la revendication 4 ou revendication 5, comprenant en outre :
une unité d'acquisition d'informations (131) configurée pour acquérir des numéros de groupe d'arrêt d'urgence qui sont définis dans les informations de groupes d'arrêt d'urgence,
et dans lequel l'unité de création d'informations (132) est configurée pour calculer le nombre total de groupes d'arrêts d'urgence, sur la base des numéros de groupes d'arrêts d'urgence.

7. Procédé de commande de communication utilisé dans un système de commande de communication (500) comprenant une pluralité de dispositifs de commande (100) configurés pour communiquer via un système de communication mobile de cinquième génération, un réseau 5G et une pluralité de dispositifs commandés (200), respectivement commandés par la pluralité de dispositifs de commande (100), le procédé de commande de communication comprenant les étapes consistant à :
calculer un nombre total de groupes d'arrêt d'urgence sur la base d'informations de groupes d'arrêt d'urgence dans lesquelles chaque numéro de groupe d'arrêt d'urgence attribué à chaque groupe d'arrêt d'urgence qui est déterminé sur la base d'une plage devant être affecté par une anomalie dans chaque dispositif commandé (200) de la pluralité de dispositifs commandés (200) est associé à chaque dispositif de commande correspondant (100) de la pluralité de dispositifs de commande (100), et créer des informations de tranche pour se connecter au même nombre de fonctions de plan d'utilisateur, UPF, que le nombre total de groupes d'arrêt d'urgence, par l'intermédiaire d'un ordinateur ;
enregistrer un dispositif de commande (100) de l'ordinateur lui-même avec le réseau 5G, et acquérir des informations de destination d'UPF, qui sont des informations de destination des UPF, par l'intermédiaire de l'ordinateur ; et
associer, sur la base des informations de destination d'UPF, chaque numéro de groupe d'arrêt d'urgence à une UPF de destination sans duplication d'une UPF de destination entre les groupes d'arrêt d'urgence, et stocker des informations dans lesquelles chaque numéro de groupe d'arrêt d'urgence est associé à une UPF de destination dans une table de conversion de destination, par l'intermédiaire de l'ordinateur.

8. Programme de commande de communication utilisé dans un système de commande de communication (500) comprenant une pluralité de dispositifs de commande (100) configurés pour communiquer via un système de communication mobile de cinquième génération, un réseau 5G et une pluralité de dispositifs commandés (200), respectivement commandés par la pluralité de dispositifs de commande (100), le procédé de commande de communication amenant un ordinateur à exécuter:
un processus de création d'informations consistant à calculer un nombre total de groupes d'arrêt d'urgence sur la base d'informations de groupes d'arrêt d'urgence dans lesquelles chaque numéro de groupe d'arrêt d'urgence attribué à chaque groupe d'arrêt d'urgence qui est déterminé sur la base d'une plage devant être affecté par une anomalie dans chaque dispositif commandé (200) de la pluralité de dispositifs commandés (200) est associé à chaque dispositif de commande correspondant (100) de la pluralité de dispositifs de commande (100), et créer des informations de tranche pour se connecter au même nombre de fonctions de plan d'utilisateur, UPF, que le nombre total de groupes d'arrêt d'urgence ;
un processus de connexion 5G consistant à enregistrer un dispositif de commande (100) du processus de connexion 5G lui-même avec le réseau 5G, et à acquérir des informations de destination d'UPF, qui sont des informations de destination des UPF ; et
un processus d'acquisition d'informations de destination consistant, sur la base des informations de destination d'UPF, à associer chaque numéro de groupe d'arrêt d'urgence à une UPF de destination sans duplication d'une UPF de destination entre les groupes d'arrêt d'urgence, et à stocker des informations dans lesquelles chaque numéro de groupe d'arrêt d'urgence est associé à une UPF de destination dans une table de conversion de destination.
